**Europäisches Patentamt**

(19) **European Patent Office**

**Office européen des brevets**

(11) Publication number : **0 359 572 B1**

(12) # EUROPEAN PATENT SPECIFICATION

(45) Date of publication of patent specification :
**16.12.92 Bulletin 92/51**

(51) Int. Cl.⁵ : **B28B 3/22, B28B 1/08**

(21) Application number : **89309366.6**

(22) Date of filing : **14.09.89**

(54) **Method and slide-casting machine for casting of one or several concrete products placed side by side.**

(30) Priority : **14.09.88 FI 884233**

(43) Date of publication of application :
**21.03.90 Bulletin 90/12**

(45) Publication of the grant of the patent :
**16.12.92 Bulletin 92/51**

(84) Designated Contracting States :
**AT BE DE ES FR GB IT NL SE**

(56) References cited :
**FR-A- 2 204 312**
**GB-A- 1 586 181**

(56) References cited :
**SOVIET INVENTIONS ILLUSTRATED, week
8614, 19th April 1986, accession no.
86-092740/14, Derwent Publications Ltd, London, GB;& SU-A-1178 598 (ROSAVTOMAT-
STROM) 15-09-1985**

(73) Proprietor : **OY PARTEK AB
PL 33
SF-37801 Toijala (FI)**

(72) Inventor : **Rantanen, Heikki
Otavantie 4
SF-37800 Toijala (FI)**

(74) Representative : **Cook, Anthony John et al
D. YOUNG & CO. 10, Staple Inn
London, WC1V 7RD (GB)**

# Description

The present invention relates to a method of and a machine for slide-casting one concrete product of a plurality of concrete products side by side at the same time by means of one casting machine.

In a machine of the slide-casting type, each concrete product is slide cast from a respective mould and high-consistency concrete mix for the concrete product(s) is fed by a plurality of feed members positioned side by side. The concrete mix of the concrete product(s) is compacted, by using a plurality of compacting members positioned side by side, to reduce the free spaces present between the aggregate particles in the concrete mix. Such a machine is disclosed in EP-125,084 or FI-70,821. Its feed members are feed screws and its compacting members are extensions of the feed screws. One of the main problems is how to ensure uniform compaction across the cross-section of each concrete product.

It has been possible to eliminate the problem to some extent by, based on experience, regulating the mutual ratio of the speeds of rotation of the feed screws by using invariable transmission ratios. However, wear of the feed screws and variations in the properties of the mix constantly alter the nature of the casting process and the compacting in the casting process.

From methods of extrusion of plastic products it is known to measure the axial force acting upon the feed screw or the pressure of the molten plastic and to regulate the speed of rotation of the feed screw on that basis. Such a method for casting of plastic is described in US-3,704,972 and US-3,090,992 as well as in CH-387,289. However, when a homogenous plastic mix is being cast, a change in the speed of rotation of the feed screw does not affect the compacting pressure, but instead affects the output flow rate.

In GB-1,586,181 a slide-casting machine is described in which wheels mounted underneath the machine are connected to a drive mechanism so as to move the machine along the casting base. The output fed to the wheels is regulated on the basis of the torque or forces acting upon the feed screw. In this way the compacting effect of the feed screws in the direction of running of the machine can be made as uniform as possible. In the apparatus it is, however, not possible to regulate the compacting separately at different points of the same cross section.

In studies and in practical casting processes it has been noticed that the compacting process requires two main components:

pressure + vibration or
pressure + shear-compacting effect.

In particular, when a so-called high-consistency concrete mix is used, the pressure component has a very high significance.

According to a first aspect of the present invention, there is provided a method of casting one concrete product, or a plurality of concrete products side by side at the same time, by means of one casting machine, the method comprising: using high-consistency concrete mix to slide cast each concrete product from a respective mould, the concrete mix for the concrete product(s) being fed by a plurality of feed members positioned side by side; and using a plurality of compacting members positioned side by side to compact the concrete mix of the concrete product(s) to reduce the free spaces present between the aggregate particles in the concrete mix; characterized in that the compacting of the concrete mix is controlled by measuring the pressure of the concrete mix or the force arising from the pressure against a part of the casting machine at at least two points of one or more cross sections of the mould(s) and by separately regulating, on the basis of the measurement values obtained, the operating values of the feed movements of the feed members independently of each other, and the compacting movements of the compacting members independently of each other.

According to a second aspect of the present invention, there is provided a slide-casting machine for casting one concrete product or a plurality of concrete products side by side, the slide-casting machine comprising: walls which form one or more moulds for respective concrete products; a plurality of feed members positioned side by side for feeding concrete mix for the concrete product(s); and a plurality of compacting members positioned side by side for compacting the concrete mix; characterized in that the slide-casting machine further comprises sensors for measuring the pressure of the concrete mix or the force arising from the pressure against a part of the casting machine at at least two points of one or more cross sections of the mould(s) and means for separately regulating, on the basis of the measurement values obtained, the operating values of the feed movements of the feed members independently of each other, and the compacting movements of the compacting members independently of each other.

With the present invention, because the single slide-casting machine with its side by side feeding members and side by side compacting members is controlled so that the feeding members are independently varied and the compacting members are independently varied, it is possible in spite of the use of high-consistency concrete mix to ensure an even compaction of the concrete mix across the mould(s) producing the concrete product(s).

In one embodiment, the feed members (feed screws) are provided with sensors for measuring the axial forces acting on the feed screws, and the axial forces are adjusted to set levels or to a desired ratio to one another by regulating the speeds of rotation of the feed screws. To do this, it is possible to use a regulating technique known in the prior art. At the same time, if necessary, the overall running resistance of the machine is set at a desired invariable level by using, e.g., friction wheels or corresponding devices.

One important application of the present invention is simultaneous manufacture of a plurality of products.

Non-limiting embodiments of the invention will now be described with reference to the accompanying drawings, wherein

Figure 1 is a partly sectional side view of one embodiment of a slide-casting machine in accordance with the invention,

Figure 2 shows the same machine as viewed from above and without a feed funnel,

Figure 3 is a partly sectional side view of a second embodiment of a slide-casting machine in accordance with the invention,

Figure 4 shows a cross section of a hollow slab to be cast and its pressure profiles,

Figure 5 is a diagrammatic side view of a third embodiment of a slide-casting machine in accordance with the invention, and

Figure 6 shows a section taken along line A-A of the machine shown in Fig. 5.

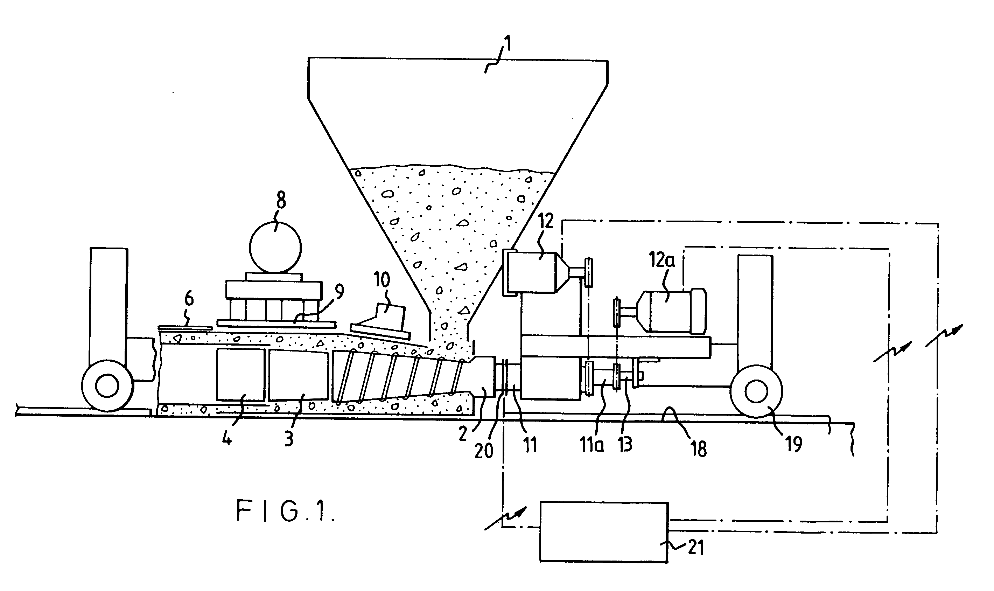

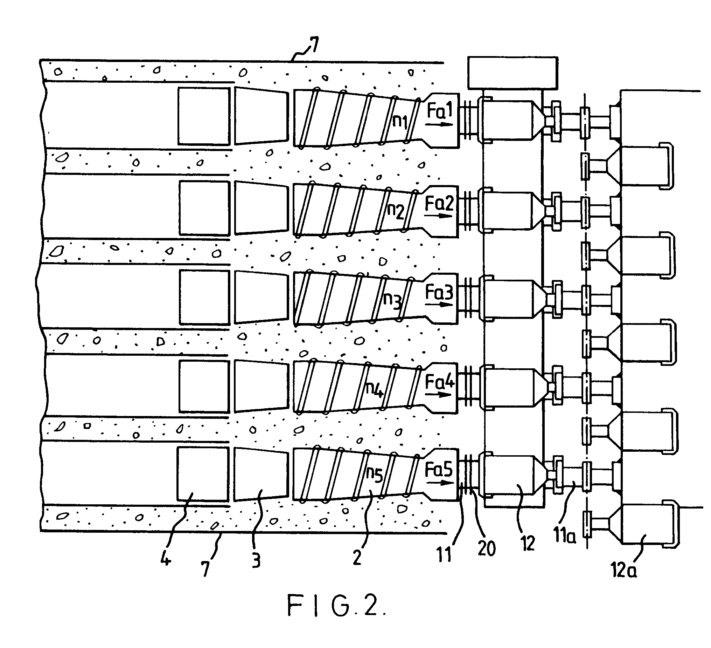

Figures 1 and 2 show a slide-casting machine. The feed funnel 1 is mounted at the initial end of the slide-casting machine. Depending on the size of the slab to be cast, the machine comprises, e.g., 3 to 8 spiral screws 2, which are conical and become larger towards the final end of the machine. After the spiral screw 2 is a hollow mandrel 3 and a follower tube 4. The device further comprises side plates 7 and a deck plane, which consists of a front rib 10, a compacting plate 9 and a follower plate 6. Above the deck plane a drive mechanism is fitted, by means of which the desired movement is obtained for the compacting plate 9. By means of the front rib 10 placed at the front end of the deck plane it is possible to regulate the mix flow. The locations and positions of the various parts of the deck plane can be varied to suit different requirements.

Each screw 2 is fixed to a shaft 11 which is driven by means of a motor 12. Each shaft has a motor 12 of its own. A shaft 11a extends through the screw 2 and through the shaft 11 up to the initial end of the hollow mandrel 3, and it is driven by a motor 12a. Likewise, each shaft 11a has a motor 12a of its own. The machine moves on a base 18 supported on wheels 19.

The friction between the wheels 19 and their shafts can be adjusted so that the overall running resistance of the machine can be regulated to the desired level. The hollow mandrel 3 is supported by a support shaft 13 passing through the drive shaft 11a of the mandrel. The initial end of the hollow mandrel is eccentrically mounted on the shaft 11a and the final end is supported on the shaft 11a via a ball joint. Thus, the mandrel moves as the shaft 11a rotates. The compacting members (mandrels) are described in detail in Finnish Patent No. 70,821.

The shaft 11 of each feed screw 2 is provided with a detector 20 which measures the axial force $F_{a1}...F_{a5}$. The measurement data are processed in a central processor 21, from which commands are given for setting the set values of the motors 12 and 12a. When, for example, the speeds of rotation of the motors 12 are regulated, the speeds of rotation $n_1...n_5$ of the feed screws 2 are varied.

In this way, each screw can be made to feed the mix so that the mix is compacted as uniformly as possible across the entire cross section. In addition to the speeds of rotation of the motors 12, in a corresponding way, it is possible to regulate the speeds of rotation of the motors 12a in order to vary the frequency of the compacting movements of the mandrels 3.

The invention is also suitable for use in machines which use a concrete compacting principle of a different type, for example a slide-casting machine for hollow slabs wherein the compacting mandrels are provided with high-frequency vibrators.

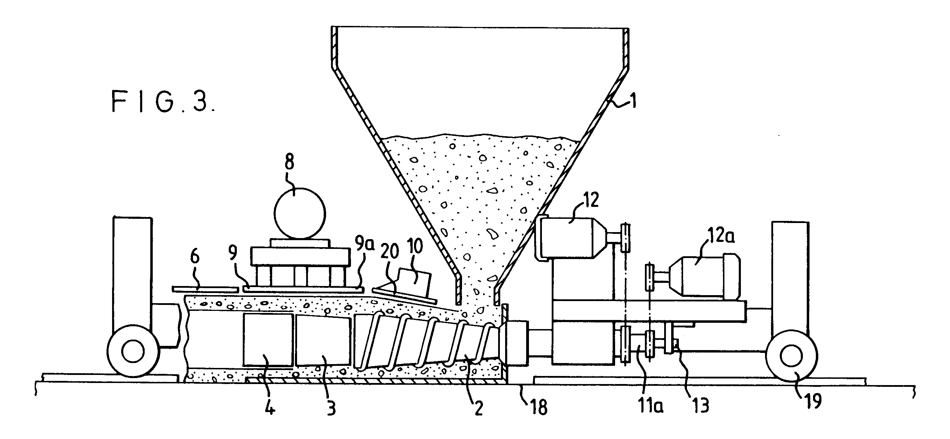

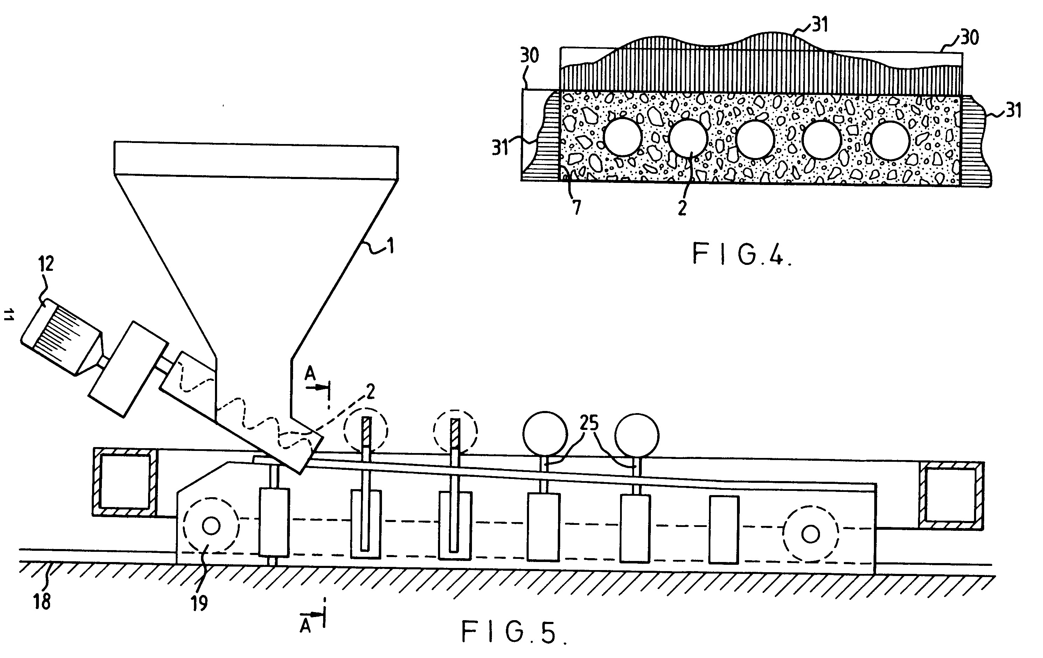

Figures 3 and 4 illustrate an alternative embodiment of the invention. Instead of detectors that measure the axial force of the feed screws 2, plate-shaped detector elements 20 are used. They are fitted on the inside faces of the nozzle part of the casting machine, i.e. at the initial end 9a of the plate 9 or on the front rib 10 and on the side plates 7, and measure the pressure profile of the concrete product. As detectors, it is possible to use known plastic membrane detectors protected in a suitable way against the abrading effect of the concrete mix. One example of a suitable membrane detector is a PVDF (polyvinyldiene fluoride) membrane which has piezoelectric characteristics.

In Fig. 4 the lines 30 represent the desired pressure profile, and the lines 31 illustrate a pressure profile of prior-art methods. On the basis of the pressure profile measured by means of the detectors so the operating values of the feed screws 2 and the compacting members 3 are regulated to the desired levels. The number of detectors to be placed side by side depends on the desired accuracy of the profile. The locations of the detectors may be varied, but usually they are located adjacent to the final ends of the feed screws and the initial ends of the compacting mandrels.

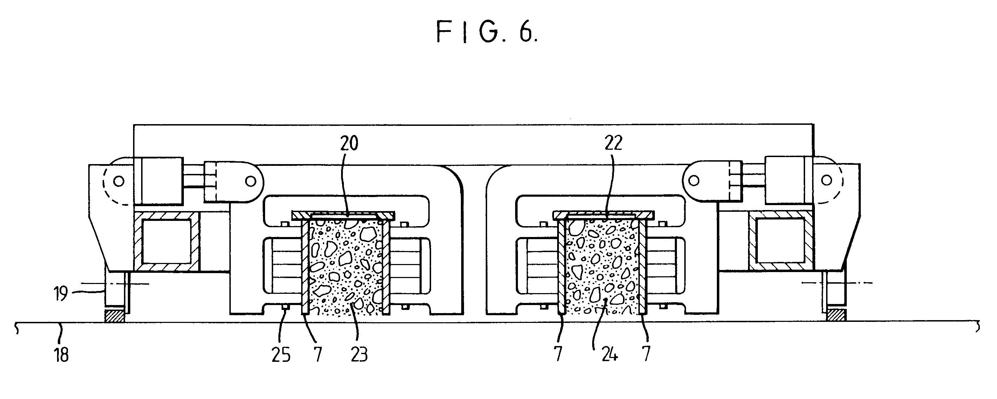

Figures 5 and 6 show a slide-casting machine wherein the concrete feed screws 2 are placed outside the cross section to be cast and the shuttering construction is provided with pressure detectors 20 and 22. The operating values of the feed screws are regulated in respect of each cross section on the basis of the pressure information supplied by the pressure detectors. Fig. 6 is a cross section taken along the line A-A in Fig. 5 and shows the locations of the detectors on the upper walls of the shuttering construction. The locations of the detectors in the longitudinal direction of the shuttering are preferably adjacent to the feed screws, but the locations may vary, and it is also possible to use several detectors placed one after the other. In the slide-casting machine of Figs, 5 and 6 the compacting of the concrete is carried out, e.g., by means of a synchronized lateral movement of the side walls of the shuttering, as is described in Finnish Patent No. 64,072, or in some other way known in prior art, e.g. by means of vibration. By means of the casting machine shown in Fig. 5, two solid-section concrete products 23 and 24 are cast at the same time. The side walls move around articulated shafts 25.

On the basis of the measurement values, it is also possible to regulate compacting members of other sorts, different from those described above. It is possible to regulate, e.g., the amplitude of the movement of a wall which pivots around an articulated shaft. Likewise, it is possible to regulate the frequency of oscillation of a vibrated wall.

The operating values of a compacting member refer to all quantities definable by means of distance and/or time, such as speed of rotation, velocity, amplitude, phasing of compacting movements, etc.

The feed members and the compacting members can be driven by known power transmission arrangements, e.g. hydraulically, by means of mechanical variators, by means of frequency-converter drives, or by means of DC-drives.

The above embodiments of the invention have been slide-casting processes in which the casting machine moves relative the base and the product, Of course, the invention is also suitable for use in casting processes in which the casting machine itself is stationary and the product to be cast and, if necessary, the casting base that supports the product move relative to the casting machine. The principle of such a process is described, e.g., in Finnish Patent Application No. 841310.

Instead of feed screws, it is also possible to employ feed members of other types and to regulate them. For example, it is possible to use chamber feeders or piston-type feeders.

In the regulating system, it is possible to use microprocessors etc. The regulation can be programmed in any desired way depending on the desired degree of automation.

**Claims**

1. A method of casting one concrete product, or a plurality of concrete products side by side at the same time, by means of one casting machine, the method comprising:

    using high-consistency concrete mix to slide cast each concrete product from a respective mould (6, 7, 9, 10), the concrete mix for the concrete product(s) being fed by a plurality of feed members (2) positioned side by side; and

    using a plurality of compacting members (3; 7) positioned side by side to compact the concrete mix of the concrete product(s) to reduce the free spaces present between the aggregate particles in the concrete mix;

    characterized in that the compacting of the concrete mix is controlled by measuring the pressure of the concrete mix or the force arising from the pressure against a part (2; 9, 7) of the casting machine at at least two points of one or more cross sections of the mould(s) and by separately regulating, on the basis of the measurement values obtained, the operating values of the feed movements of the feed members independently of each other, and the compacting movements of the compacting members (3; 7) independently of each other.

2. A method as claimed in claim 1, wherein the axial forces acting on feed screws (2) that operate as the feed members are measured to produce the measurement values.

3. A method as claimed in claim 1, wherein the pressure acting upon at least one wall (9, 7) of the mould(s) is measured to produce the measurement values.

4. A method as claimed in any of claims 1 to 3, wherein the feed movements which are regulated are the speeds of rotation of feed screws (2) which operate as the feed members (2).

5. A method as claimed in any of claims 1 to 3, wherein the compacting movements which are regulated are the speed of movement or the amplitude of movement or the relative phasing of the movements of the compacting members (3; 7).

6. A method as claimed in any of claims 1 to 5, wherein the running resistance of the slide-casting machine on a casting base (18) is set at a desired level or the running speed of the machine is set at a desired level by means of a running mechanism.

7. A slide-casting machine for casting one concrete product or a plurality of concrete products side by side, the slide-casting machine comprising:

    walls (7, 10) which form one or more moulds for respective concrete products;

    a plurality of feed members (2) positioned side by side for feeding concrete mix for the concrete product(s); and

    a plurality of compacting members (3; 7) positioned side by side for compacting the concrete mix;

characterized in that the slide-casting machine further comprises sensors (20, 22) for measuring the pressure of the concrete mix or the force arising from the pressure against a part of the casting machine at at least two points of one or more cross sections of the mould(s) and means for separately regulating, on the basis of the measurement values obtained, the operating values of the feed movements of the feed members (2) independently of each other, and the compacting movements of the compacting members (3; 7) independently of each other.

8. A slide-casting machine as claimed in claim 7, wherein the sensors (20, 22) comprise sensors (20) for measuring the axial forces acting on feed screws (2) which operate as the feed members (2).

9. A slide-casting machine as claimed in claim 7, wherein the sensors (20, 22) comprise sensors (20, 22) for measuring the pressure acting upon at least one of the walls (7, 10) of the casting machine.

10. A slide-casting machine as claimed in any of claims 7 to 9, wherein the feed movements arranged to be regulated by the regulating means are the speeds of rotation of feed screws (2) arranged to operate as the feed members (2).

11. A slide-casting machine as claimed in any of claims 7 to 9, wherein the compacting movements arranged to be regulated by the regulating means are the speed of movement or the amplitude of movement or the relative phasing of the movements of the compacting members (3; 7).

12. A slide-casting machine as claimed in any of claims 7 to 11, further comprising means for setting at a desired level the running resistance of the machine on a casting base (18) or the running speed of the machine.

**Patentansprüche**

1. Verfahren zum Gießen eines oder einer Mehrzahl von nebeneinander angeordneten Betongegenständen zur gleichen Zeit mittels einer Gießvorrichtung mit folgenden Verfahrensschritten: Verwendung einer Betonmischung mit hoher Konsistenz zum Gleitfertigen jedes Betongegenstandes mit entsprechenden Gußformen (6, 7, 9, 10), wobei die Betonmischung für den/die Betongegenstände durch eine Vielzahl von nebeneinander angeordneten Zuführungseinrichtungen (2) zugeführt wird; und

Verwendung einer Mehrzahl von nebeneinander angeordneten Preßteilen (3; 7), um die Betonmischung für den/die Betongegenstände zu verdichten und die zwischen Zuschlagteilen der Betonmischung vorhandenen freien Räume zu reduzieren;

dadurch gekennzeichnet, daß die Verdichtung der Betonmischung durch Messung des Druckes der Betonmischung oder der Kraft gesteuert wird, die durch den Druck gegen einen Teil (2; 9, 7) der Gießvorrichtung an mindestens zwei Punkten eines oder mehrerer Querschnitte der Gußform(en) entsteht, und daß auf der Basis der erhaltenen Meßwerte die Betriebswerte der Förderbewegungen der Zuführungseinrichtungen, sowie die Preßbewegungen der Preßteile (3; 7) jeweils unabhängig voneinander und getrennt geregelt werden.

2. Verfahren nach Anspruch 1, dadurch gekennzeichnet, daß die axialen Kräfte, die auf die als Zuführungseinrichtungen dienenden Förderschnekken (2) einwirken, zur Erzeugung der Meßwerte gemessen werden.

3. Verfahren nach Anspruch 1, dadurch gekennzeichnet, daß der auf mindestens eine Wand (9, 7) der Gußformen ausgeübte Druck zur Erzeugung der Meßwerte gemessen wird.

4. Verfahren nach mindestens einem der Ansprüche 1 bis 3, dadurch gekennzeichnet, daß die geregelten Förderbewegungen die Drehgeschwindigkeiten der Förderschnecken (2) darstellen, die als Zuführungseinrichtungen (2) dienen.

5. Verfahren nach mindestens einem der Ansprüche 1 bis 3, dadurch gekennzeichnet, daß die geregelten Preßbewegungen die Geschwindigkeit oder die Amplitude der Bewegung oder die relativen Phasen der Bewegungen der Preßteile (3; 7) darstellen.

6. Verfahren nach mindestens einem der Ansprüche 1 bis 5, dadurch gekennzeichnet, daß der Laufwiderstand des Gleitfertigers auf einer Gießplattform (18) oder die Laufgeschwindigkeit des Gleitfertigers mittels einer Laufeinrichtung auf einen gewünschten Wert eingestellt wird.

7. Gleitfertiger zum Gießen eines oder einer Mehrzahl von nebeneinander angeordneten Betongegenständen mit: Wänden (7, 10), die eine oder mehrere Gußformen für entsprechende Betongegenstände bilden;

einer Mehrzahl von nebeneinander angeordneten Zuführungseinrichtungen (2) zur Zuführung der Betonmischung für den/die Betongegenstände; und

einer Mehrzahl von nebeneinander angeordneten Preßteilen (3; 7) zum Verdichten der Betonmischung;

dadurch gekennzeichnet, daß der Gleitfertiger weiterhin Sensoren (20, 22) zur Messung des Druckes der Betonmischung oder der Kraft aufweist, die durch den Druck gegen einen Teil der Gießvorrichtung an mindestens zwei Punkten eines oder mehrerer Querschnitte der Gußform(en) entsteht, und daß Einrichtungen vorgesehen sind, mit denen auf der Grundlage der erhaltenen Meßwerte die Betriebswerte der Förderbewegungen der Zuführungseinrichtungen (2) sowie der Preßbewegungen der Preßteile (3; 7) jeweils unabhängig voneinander und getrennt geregelt werden.

8. Gleitfertiger nach Anspruch 7,
dadurch gekennzeichnet, daß die Sensoren (20, 22) Sensoren (20) zur Messung der axialen Kräfte aufweisen, die auf die als Zuführungseinrichtungen (2) dienenden Förderschnecken (2) einwirken.

9. Gleitfertiger nach Anspruch 7,
dadurch gekennzeichnet, daß die Sensoren (20, 22) Sensoren (20, 22) zur Messung des auf mindestens eine der Wände (7, 10) der Gießvorrichtung einwirkenden Kräfte aufweisen.

10. Gleitfertiger nach mindestens einem der Ansprüche 7 bis 9,
dadurch gekennzeichnet, daß die durch die Regeleinrichtungen geregelten Förderbewegungen die Rotationsgeschwindigkeiten der Förderschnecken (2) darstellen, die als Zuführungseinrichtungen (2) betrieben werden.

11. Gleitfertiger nach mindestens einem der Ansprüche 7 bis 9,
dadurch gekennzeichnet, daß die durch die Regeleinrichtungen geregelten Preßbewegungen die Geschwindigkeit oder die Amplitude der Bewegung oder die relativen Phasen der Bewegungen der Preßteile (3; 7) darstellen.

12. Gleitfertiger nach mindestens einem der Ansprüche 7 bis 11,
gekennzeichnet durch Einrichtungen zum Einstellen des Laufwiderstandes des Gleitfertigers auf einer Gießplattform (18) oder der Laufgeschwindigkeit des Gleitfertigers auf einen gewünschten Wert.

## Revendications

1. Procédé de moulage d'un élément en béton ou d'une pluralité d'éléments en béton côte à côte en même temps, au moyen d'une machine de moulage, le procédé comprenant :

l'utilisation d'un mélange de béton à consistance élevée pour filer chaque éléments de béton dans un moule respectif (6, 7, 9, 10), le mélange de béton pour le ou les éléments en béton étant amené par une pluralité d'organes d'alimentation (2) positionnés côte à côte ; et

l'utilisation d'une pluralité d'organes compacteurs (3; 7) positionnés côte à côte pour compacter le mélange de béton de ou des éléments en béton afin de réduire les espaces libres présents entre les particules de granulat dans le mélange de béton ;

caractérisé en ce que le compactage du mélange de béton est controlé en mesurant la pression du mélange de béton ou la force résultant de la pression exercée contre une partie (2; 9, 7) de la machine de moulage à au moins deux points d'une ou de plusieurs sections transversales du ou des moules et en réglant séparément, sur la base des valeurs de mesure obtenues, les valeurs de fonctionnement des mouvements d'alimentation des organes d'alimentation indépendamment les uns des autres et les mouvements de compactage des organes compacteurs (3; 7) indépendamment les uns des autres.

2. Procédé selon la revendication 1, dans lequel les forces axiales agissant sur les vis d'alimentation (2) qui fonctionnent comme organes d'alimentation sont mesurées pour produire les valeurs de mesure.

3. Procédé selon la revendication 1, dans lequel la pression agissant sur au moins une paroi (9, 7) du ou des moules est mesurée pour produire les valeurs de mesure.

4. Procédé selon l'une des revendications 1 à 3, dans lequel les mouvements d'amenée qui sont réglés constituent les vitesses de rotation des vis d'alimentation (2) qui fonctionnent comme organes d'alimentation (2).

5. Procédé selon l'une des revendications 1 à 3, dans lequel les mouvements de compactage qui sont réglés constituent la vitesse de déplacement ou l'amplitude de déplacement ou la mise en phase relative des mouvements des organes compacteurs (3; 7).

6. Procédé selon l'une des revendications 1 à 5, dans lequel l'effort résistant de la machine fileuse sur un socle de moulage (18) est réglé à un niveau recherché, ou la vitesse de marche de la machine est réglée à un niveau recherché au moyen d'un mécanisme de marche.

7. Machine fileuse pour le moulage d'un élément en béton ou d'un pluralité d'éléments en béton côte à côte, la machine fileuse comprenant :

    - des parois (7, 10) qui forment un ou plusieurs moules pour des éléments en béton respectifs ;
    - une pluralité d'organes d'alimentation (2) positionnés côte à côte pour amener le mélange de béton pour le ou les éléments en béton ; et
    - une pluralité d'organes compacteurs (3; 7) positionnés côte à côte pour compacter le mélange de béton ;

      caractérisé en ce que la machine fileuse comprend, en outre, des capteurs (20, 22) pour mesurer la pression du mélange de béton ou la force résultant de la pression exercée contre une partie de la machine de moulage à au moins deux points d'une ou de plusieurs sections transversales du ou des moules, et des moyens pour régler séparément, sur la base des valeurs de mesure obtenues, les valeurs de fonctionnement des mouvements d'amenée des organes d'alimentation (2) indépendamment les uns des autres, et les mouvements de compactage des organes compacteurs (3; 7) indépendamment les uns des autres.

8. Machine fileuse selon la revendication 7, dans laquelle les capteurs (20, 22) comprennent des capteurs (20) pour mesurer les forces axiales agissant sur les vis d'alimentation (2) qui fonctionnent comme organes d'alimentation (2).

9. Machine fileuse selon la revendication 7, dans laquelle les capteurs (20, 22) comprennent des capteurs (20, 22) pour mesurer la pression agissant sur au moins l'une des parois (7; 10) de la machine de moulage.

10. Machine fileuse selon les revendications 7 à 9, dans laquelle les mouvements d'amenée agencés de façon à être réglés par les moyens de réglage constituent les vitesses de rotation des vis d'alimentation (2) diposées de façon à fonctionner comme organes d'alimentation (2).

11. Machine fileuse selon l'une des revendications 7 à 9, dans laquelle les mouvements de compactage agencés de façon à être réglés par les moyens de réglage constituent la vitesse de déplacement ou l'amplitude de mouvement ou la mise en phase relative des mouvements des organes compacteurs (3; 7).

12. Machine fileuse selon l'une des revendications 7 à 11, comprenant en outre des moyens pour régler à un niveau souhaité l'effort résistant de la machine sur un socle de moulage (18) ou la vitesse de marche de la machine.

FIG.1.

F I G. 2.

F I G. 3.

FIG.4.

FIG.5.

EP 0 359 572 B1

FIG. 6.